# EUROPEAN PATENT APPLICATION

(11) **EP 4 119 430 A1**
(43) Date of publication of application: **18.01.2023**
(21) Application number: 22184779.1
(22) Date of filing: 13.07.2022
(51) Int. Cl.: B62M 9/10, B62M 9/121

(54) **PULLEY FOR A REAR DERAILLEUR OF A BICYCLE**

(30) Priority: 14.07.2021 DE 102021118246
(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention relates to a pulley (1) for a bicycle rear derailleur (100), the pulley (1) carrying on each of its side faces a cushioning ring (4) made of an elastically deformable material and adapted to come in contact with link plates of a roller chain (3) running over the pulley (1), wherein each cushioning ring (4) comprises, at least on its side facing the roller chain (3), a groove extending along its entire perimeter length, which groove, as seen in a cross-sectional view through the cushioning ring (4), is a recess (9) flanked by two protrusions (8), wherein the protrusions (8) are adapted and orientated to come in contact with outer and inner link plates, respectively, of a roller chain (3 ) running over the pulley (1).

## Description

The present invention relates to a pulley for a rear derailleur of a bicycle carrying on each of its side faces a cushioning ring made of an elastically deformable material and adapted to come in contact with link plates of a roller chain running over the pulley.

A pulley with a ring made of an elastically deformable material is disclosed in US 975 938 A in the form of a sprocket, wherein the cushioning rings serve as cushions between the teeth of the sprocket and the link plates of a roller chain engaged with the sprocket. As disclosed therein, the cushioning rings may have an annular or rectangular cross section.

Further pulleys with respective cushioning rings made of an elastically deformable material are disclosed in US 10 253 865 B2 in the form of sprockets of a multi-gear cassette for a rear wheel of a bicycle, wherein the cushioning rings dampen the forces produced by the chain members running from the slack span of the chain onto a sprocket. These cushioning rings have rectangular cross sections.

However, the prior art pulleys are relatively noisy and buckling in operation. In addition, the above discussed prior art pulleys are not suited to provide for a low-noise and smooth operation in a pulley for a bicycle rear derailleur.

Accordingly, it is an object of the present invention to provide a pulley for a bicycle rear derailleur with silencing characteristics which is very low-noise in operation and runs very smoothly.

The above object and further objects, which will become apparent hereinafter, are achieved by a pulley having the features of claim 1.

The present invention also provides for a rear derailleur of a bicycle according to claim 23 including the pulley of the invention.

Further advantageous features are set out in the dependent claims.

According to the invention, the pulley is for a bicycle rear derailleur. Such a derailleur usually comprises, as is known in the art, a guide pulley and a tension pulley both being rotatably mounted on a derailleur cage which is movable with respect to the bicycle and adapted to guide and tension a bicycle roller chain in an S-shape feeding to the cassette. The cage can be positioned under the desired sprocket of a multi-gear cassette attached to the hub of a rear wheel of a bicycle by an arm that can swing back and forth under the sprockets. Gear shifting is carried out by moving the arm which transfers the chain from one sprocket to another while pedaling.

Further, according to the invention, each cushioning ring comprises, at least on its side facing the roller chain, a groove extending along its entire perimeter length, which groove, as seen in a cross-sectional view through the cushioning ring, is a recess flanked by two protrusions, wherein the protrusions are adapted and orientated to come in contact with outer and inner link plates, respectively, of a roller chain running over the pulley.

In a rear derailleur of a bicycle the inventive cushioning rings are particularly advantageous because the forces produced by the chain members running from the slack span of the chain onto the tension pulley and then onto the guide pulley are relatively low and need only relatively weak dampening forces, as they can be provided by the two protrusions which may be much narrower than the total width of the outer and inner link plates.

By such relatively weak dampening, it is possible to make the rear derailleur super silent which is a massive advantage over conventional derailleurs. This is achieved practically without any power losses that inevitably accompany any damping. Thus, the rear derailleur becomes extremely smooth-running.

While the dampening of the cushioning rings according to the invention is particular advantageous for the guide pulley of a bicycle rear derailleur, also the tension pulley of a bicycle rear derailleur may advantageously carry such cushioning rings in addition to the guide pulley or independently of the guide pulley.

Preferably, the pulleys have a plurality of teeth. In the case of rear derailleurs, we speak of teethed pulleys instead of sprockets because the teeth of such pulleys which transfer no longitudinal forces must not be so pronounced as the teeth of a sprocket which usually transfer longitudinal forces (for example cassette sprockets).

Preferably, in a cross-sectional view through the cushioning ring the protrusions on each cushioning ring are curved convexly and are connected contiguously by the recess which is curved concavely, as seen from inside the cushioning ring.

In preferred embodiments, the cross section of each cushioning ring is generally x-shaped. In particular, the cross-sectional profile of each cushioning ring may have the shape of an alphabetic character x whose legs are short with respect to the body of the character and may have concave sections between the legs. Preferably, the ends of the legs are concavely rounded. The legs may also be short with respect to their length and have concavely rounded ends.

In a cross-sectional view through the cushioning ring, the concavely rounded ends of the legs may be four circumferentially distributed and convexly curved protrusions of the respective cushioning ring which are connected contiguously by four circumferentially distributed and concavely curved recessions. Some profiles of this type can be mathematically described as elongated hypotrochoids with reversal points and four peaks, which are continuous and continuously differentiable, but the cross-sectional profile of the cushioning ring is not limited to such special shapes or to continuous and/or continuously differentiable shapes.

The x-shaped cushioning rings according the preferred embodiments should be mounted to the pulley in a manner and orientation in which two convexly curved protrusions of the respective cushioning ring partially face the outer and inner link plates, respectively, of a roller chain running over the pulley and are able to come in contact therewith.

In one preferred embodiment of the invention each cushioning ring is supported radially by a number of spaced supports formed laterally to the pulley and projecting in the axial direction of the pulley, the number of spaced supports being equal to the number of teeth of the pulley, each support being angularly aligned or in line with one respective tooth of the pulley, and between every two adjacent supports the cushioning ring extends free-floating in a straight line.

That means that the supports are spaced angularly at equal angles. The cushioning ring will be adapted to be held by the supports with a certain tension with which it is accommodated in the annular channel. By means of this tension the chain link plates can be slowed down very smoothly by small forces when the chain members run onto the pulley. This contributes to make the derailleur very silent and smooth-running.

Because in the foregoing embodiment the supports are angularly aligned with the respective teeth of the pulley, the free-floating portions of the cushioning ring extend between each pair of adjacent teeth. Such an angular arrangement of the free-floating portions of the cushioning ring relative to the teeth is suitable to accommodate the connection areas of inner and outer link plates that are wider at their interconnected ends than in the middle, as is the case with common bicycle chains.

Furthermore, the free-floating portions of the cushioning ring relative to the teeth dampen the impact of the chain rollers on the portion of the pulley between two adjacent teeth. Such portions are commonly known in the art as depressions or valleys which are formed between consecutive teeth of a pulley as seen in the axial direction of the pulley. Advantageously, the free-floating portions of the cushioning ring relative to the teeth prevent, at least at the initial contact of the chain with the pulley, the contact of the chain rollers with the depressions or valleys between consecutive teeth, such that the cushioning ring is contacted only by the link plates of the chain.

In the foregoing embodiment, each cushioning ring may be supported axially between one side face of the pulley and radial extensions formed at each support. According to the invention, the side face of the pulley includes the section of the pulley adjacent to the depressions or valleys between consecutive teeth as seen in the axial direction of the pulley and this section is sometimes designated in the art as the root section of the teeth. Each cushioning ring may project radially from the radial extensions, preferably by at least 1/4 of the total radial height of the cushioning ring and more preferably by at least 2/5 of the total radial height of the cushioning ring.

Every two adjacent supports may be continuously connected by a concavely curved transition piece formed laterally to the pulley and all supports and all concavely curved transition pieces on one side of the pulley form a continuous or contiguous undulating track extending radially beneath the corresponding cushioning ring. The concavely curved transition pieces of each undulating track form fixed end stops which may limit any downward movements of the free-floating portions of each cushioning ring in the direction of the axis of the pulley to the amount by which the free-floating portions shall yield in the direction of the axis when the connection areas of inner and outer link plates of a chain run onto the pulley.

The supports and/or the concavely curved transition pieces may be advantageously made in one piece with the pulley although the supports and/or the concavely curved transition pieces may be manufactured separately and fixedly joined to the pulley.

In another embodiment of the invention, each cushioning ring is supported by an annular channel formed adjacent to each side face of the pulley and opening radially outward, wherein in a side view of the pulley, the annular channel forms a polygon, wherein the number of corners of the polygon is equal to the number of teeth of the pulley, and wherein the corners of the polygon are angularly offset from the center of the teeth of the pulley by half the angular distance between adjacent teeth of the pulley. The cushioning ring is accommodated in the annular channel with a certain tension. The annular channel may be advantageously made in one piece with the pulley. Alternatively, the annular channel may be fixedly joined with the pulley.

Because in the foregoing embodiment the corners of the polygon are angularly offset from the center of the teeth of the pulley, the cushioning ring has straight portions, each straight portion extending under one tooth of the pulley and being angularly aligned with the respective tooth of the pulley.

The angular offset of the polygon corners from the teeth is particularly suitable in cases, wherein the derailleur is intended for chains of an unconventional type, wherein tops of the link plates are straight-line which enables a narrower chain construction with increased strength and durability. Such chains are known in the art as AXS or "flattop" chains and are manufactured by the SRAM corporation.

The embodiment with the polygonal cushioning ring is particularly suited when embodied as a guide pulley of a rear derailleur in conjunction with AXS "flattop" chains devised as mentioned above. In a rear derailleur, the chain runs with the straight tops over the guide pulley and the straight tops perfectly match the straight portions of the polygonal cushioning ring of the guide pulley. Accordingly, the impact of the chain on the guide pulley is smooth and silent.

In the foregoing embodiment, the annular channel forming a polygon may be limited radially by a polygonal shoulder formed laterally to the pulley, and the annular channel forming a polygon may be defined axially between the side face of the pulley and a polygonal radial extension of the polygonal lateral shoulder, which forms a flange. That is, the cushioning ring is supported radially by the polygonal lateral shoulder and axially between the side face of the teeth and the radial extension of the polygonal shoulder.

The corners of the polygonal shoulder may be rounded. The corners of the polygonal radial extension of the polygonal shoulder may also be rounded.

In addition, in the foregoing embodiment, the polygonal shoulder may comprise a number of straight portions equal to the number of teeth of the pulley and angularly aligned with each respective tooth of the pulley. The polygonal radial extension of the polygonal shoulder may comprise a number of straight portions equal to the number of teeth of the pulley, each straight potion being angularly aligned with a respective tooth of the pulley.

In the foregoing embodiment, each cushioning ring may advantageously project radially from the annular channel, preferably by at least 1/4 of the total radial height of the cushioning ring and more preferably by at least 2/5 of the total radial height of the cushioning ring.

In the embodiment with the polygonal cushioning ring, the straight portions of the cushioning ring dampen the impact of the chain rollers on the depressions or valleys between consecutive teeth. Advantageously, the straight portions of the cushioning ring prevent, at least during the initial contact of the chain with the pulley, the contact of the chain rollers with the depressions or valleys between consecutive teeth, such that the cushioning ring is contacted only by the link plates of the chain.

In a further embodiment of the invention each cushioning ring is supported by a circular channel formed adjacent to each side face of the pulley and opening radially outward. The cushioning ring advantageously is accommodated in the circular channel with a certain tension. The circular channel may be made in one piece with the pulley or may be separately manufactured and fixedly joined to the pulley later. The circular channel may be limited radially by a circular shoulder formed laterally to the pulley and may be defined axially between the side face of the pulley and a circular radial extension of the circular shoulder, which forms a flange. That is, the cushioning ring is supported radially by the circular shoulder and axially between the side face of the pulley and the radial extension of the circular shoulder.

Also in the foregoing embodiment, each cushioning ring may advantageously project radially from the circular channel, preferably by at least 1/4 of the total radial height of the cushioning ring and more preferably by at least 2/5 of the total radial height of the cushioning ring.

The invention is suited for a special form of a bicycle rear derailleur wherein the pulleys are rotatably mounted to the cage by mounting means and an interposed radial bearing, wherein the mounting means are arranged so as to be spaced from the center of rotation of the pulleys and are positioned along a circular mounting opening provided in the cage spaced away from the center of rotation of the pulleys, so as to leave a free space in the center of the pulleys in its mounted state, as is described in EP 20177531.9. The relevant teaching of EP 20177531.9 is herewith incorporated by reference.

The invention is also suited for common bicycle rear derailleurs, wherein, for instance, the pulleys can be rotatably mounted between two lateral plates of the cage on central bearings which are fitted on central bolts which connect two lateral plates of the cage to each other.

The elastically deformable material may be natural or synthetic rubber, polymer or elastomer or mixtures of the foregoing materials.

The above and other features of the invention will become apparent from the following description of preferred embodiments, given by way of non-limiting example with reference to the accompanying drawings, wherein:
Figure 1a is a perspective view of a first embodiment of a pulley of a rear derailleur of a bicycle;
Figure 2a is the same perspective view as in Fig. 1a further showing a part of a roller chain running over the pulley;
Figure 3a is a plan side view of the arrangement of Fig. 2a as seen from a position lying distantly from the pulley on its axis;
Figure 4a is a sectional view through an angular sector of the tension pulley as seen from the same position as in Fig. 3a;
Figure 5a is a sectional view of the pulley of Fig. 1a along the line 5a-5a in Fig. 3a;
Figure 6a is a sectional view of the arrangement of Fig. 2a as seen from a position lying distantly from the pulley on its plane;
Figure 7a is an enlarged sectional view of a radial outer part of the pulley along the line 7a-7a in Fig. 4a, i.e., through one of the teeth of the pulley;
Figure 8a is an enlarged sectional view of a radial outer part of the pulley along the line 8a-8a in Fig. 4a, i.e., through the gap between two consecutive teeth of the pulley;
Figure 9a is a perspective view of the angular sector of the tension pulley as shown in Fig. 4a, wherein one of the cushioning rings is partially cut away;

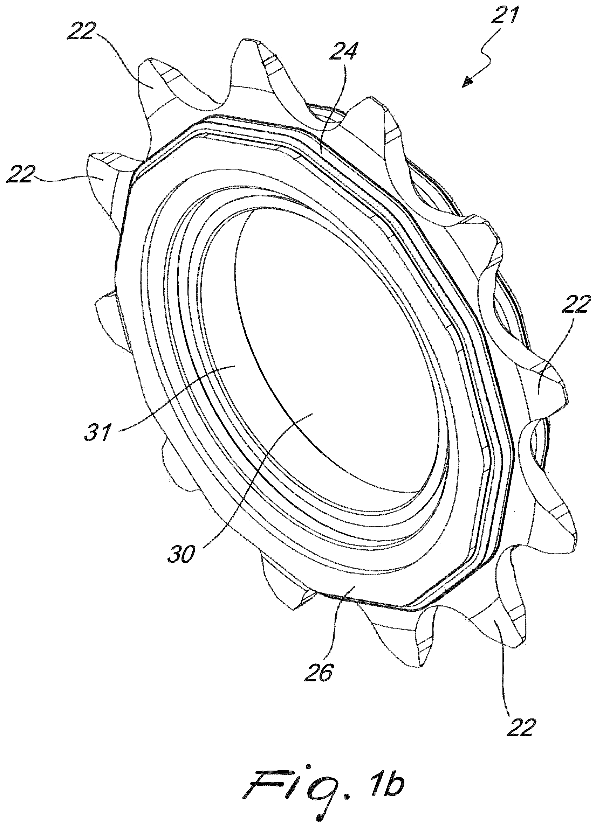

Figure 1b is a perspective view of a second embodiment of a pulley of a rear derailleur of a bicycle;

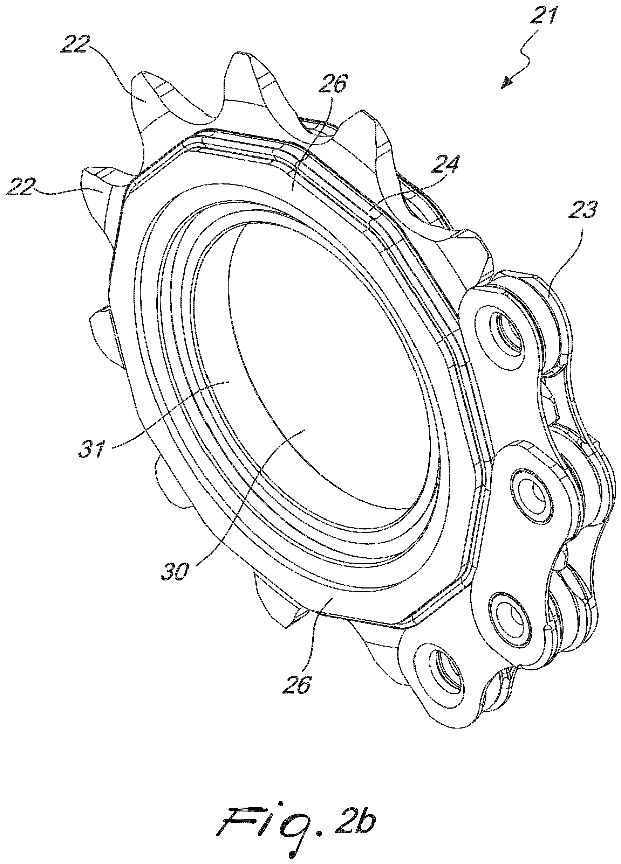

Figure 2b is the same perspective view as in Fig. 1b further showing a part of a roller chain running over the pulley;

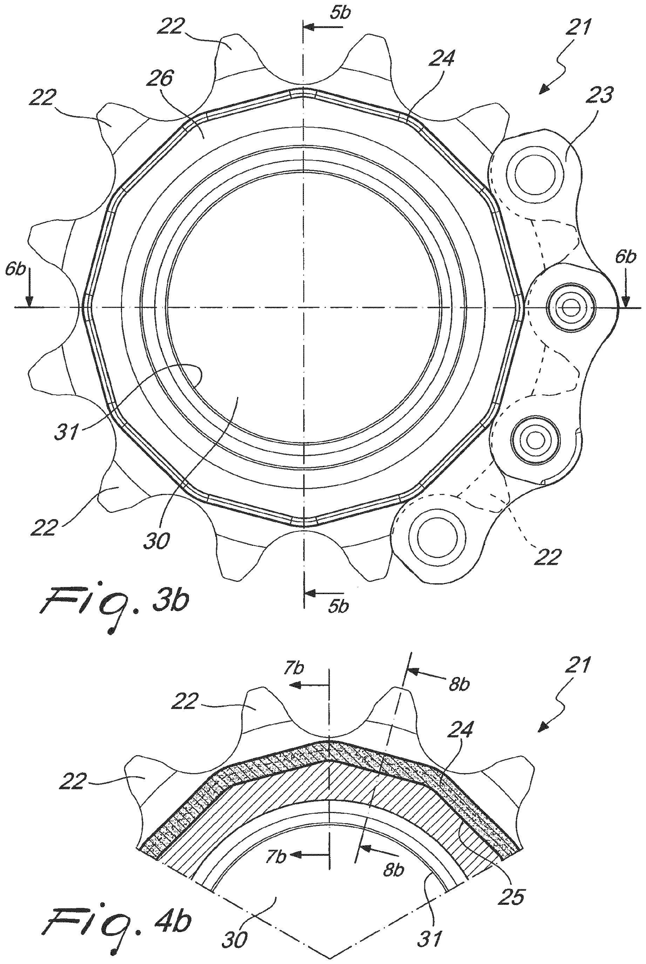

Figure 3b is a plan side view of the arrangement of Fig. 2b as seen from a position lying distantly from the pulley on its axis;
Figure 4b is a sectional view through an angular sector of the tension pulley as seen from the same position as in Fig. 3b;

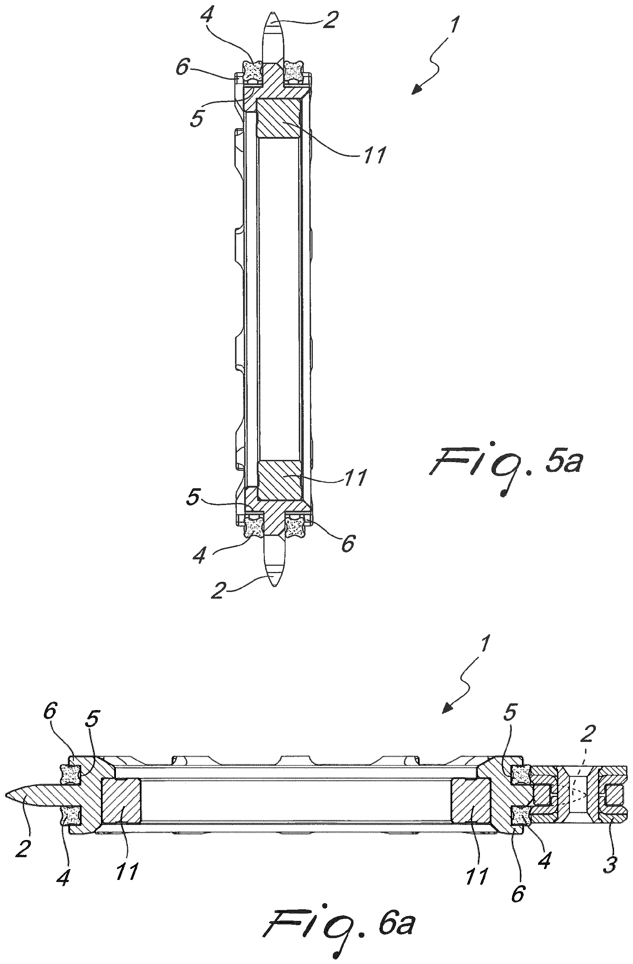

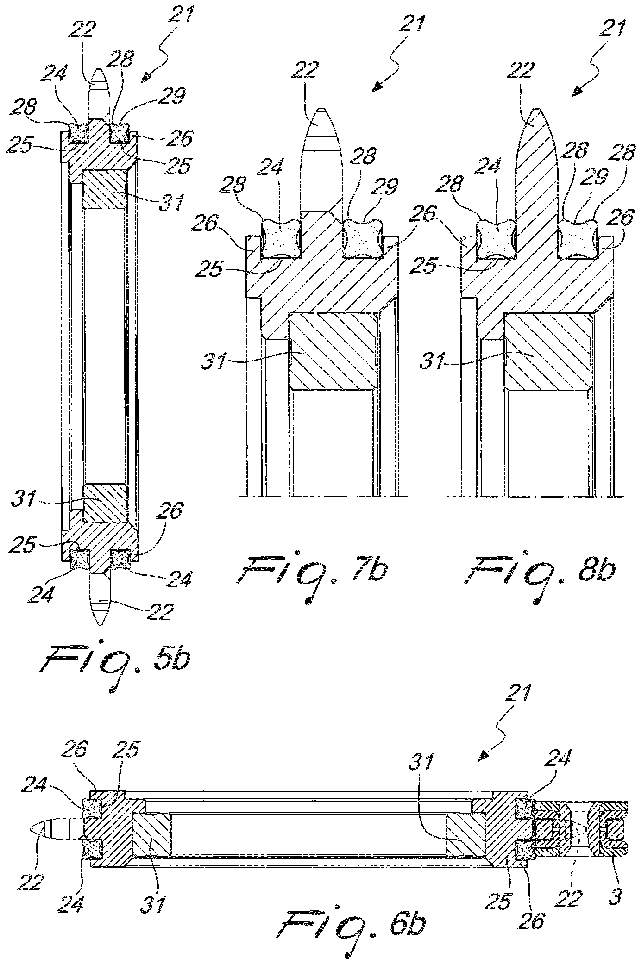

Figure 5b is a sectional view of the pulley of Fig. 1b along the line 5b-5b in Fig. 3b;

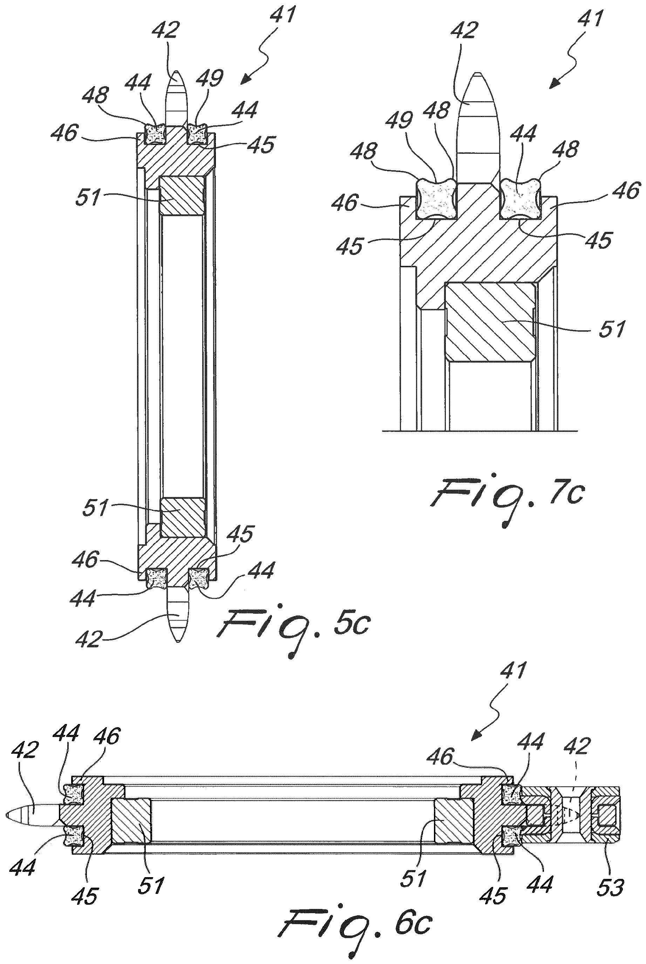

Figure 6b is a sectional view of the arrangement of Fig. 2b as seen from a position lying distantly from the pulley on its plane;
Figure 7b is an enlarged sectional view of a radial outer part of the pulley along the line 7b-7b in Fig. 4b, i.e., through the gap between two consecutive teeth of the pulley;
Figure 8b is an enlarged sectional view of a radial outer part of the pulley along the line 8b-8b in Fig. 4b, i.e., through one of the teeth of the pulley;

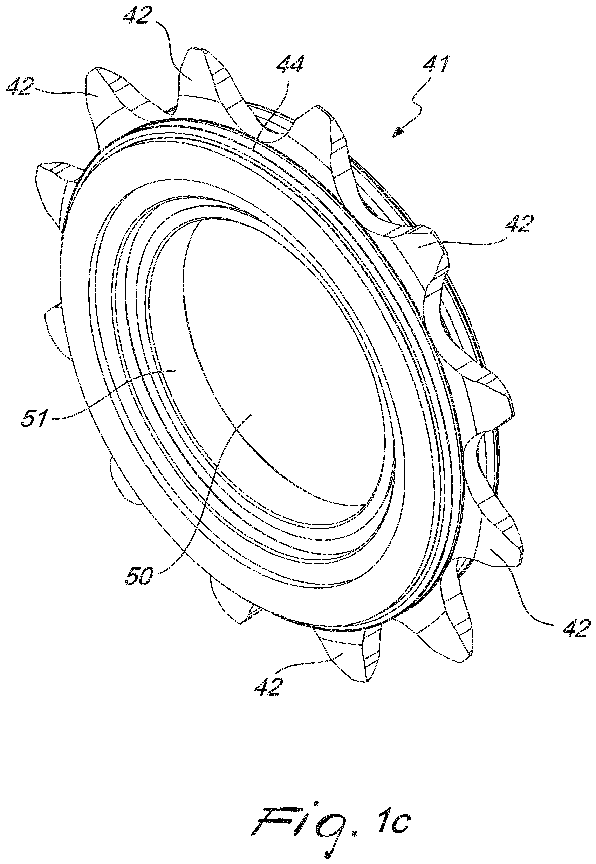

Figure 1c is a perspective view of a third embodiment of a pulley of a rear derailleur of a bicycle;

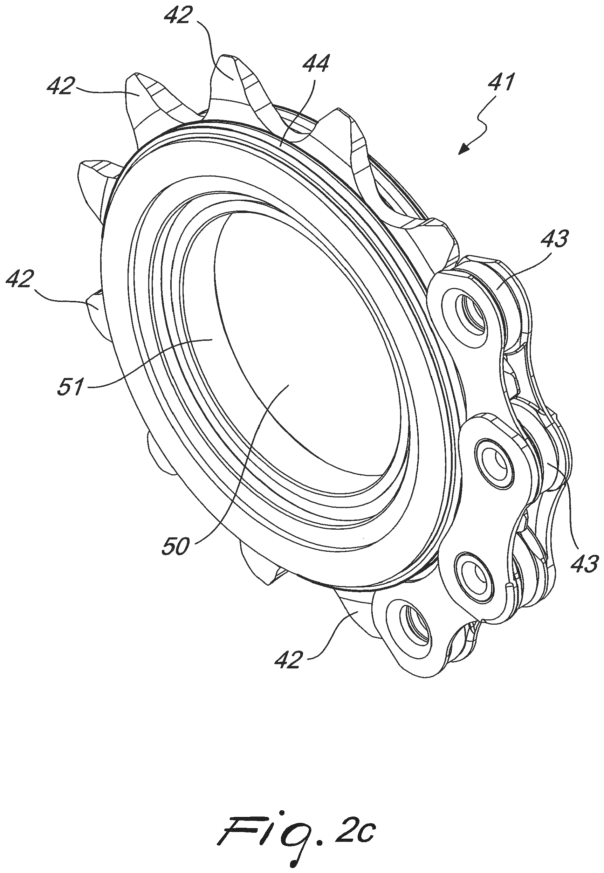

Figure 2c is the same perspective view as in Fig. 1c further showing a part of a roller chain running over the pulley;

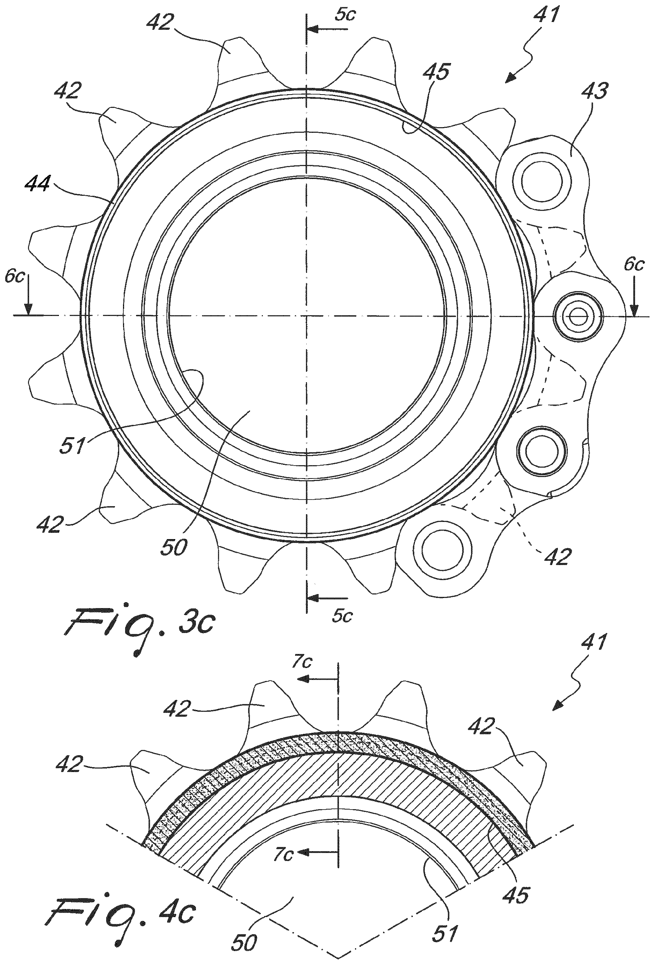

Figure 3c is a plan side view of the arrangement of Fig. 2c as seen from a position lying distantly from the pulley on its axis;
Figure 4c is a sectional view through an angular sector of the tension pulley as seen from the same position as in Fig. 3c;
Figure 5c is a sectional view of the pulley of Fig. 1c along the line 5c-5c in Fig. 3c;
Figure 6b is a sectional view of the arrangement of Fig. 2c as seen from a position lying distantly from the pulley on its plane;
Figure 7c is an enlarged sectional view of a radial outer part of the pulley along the line 7c-7c in Fig. 4c, i.e., through the gap between two consecutive teeth of the pulley; and

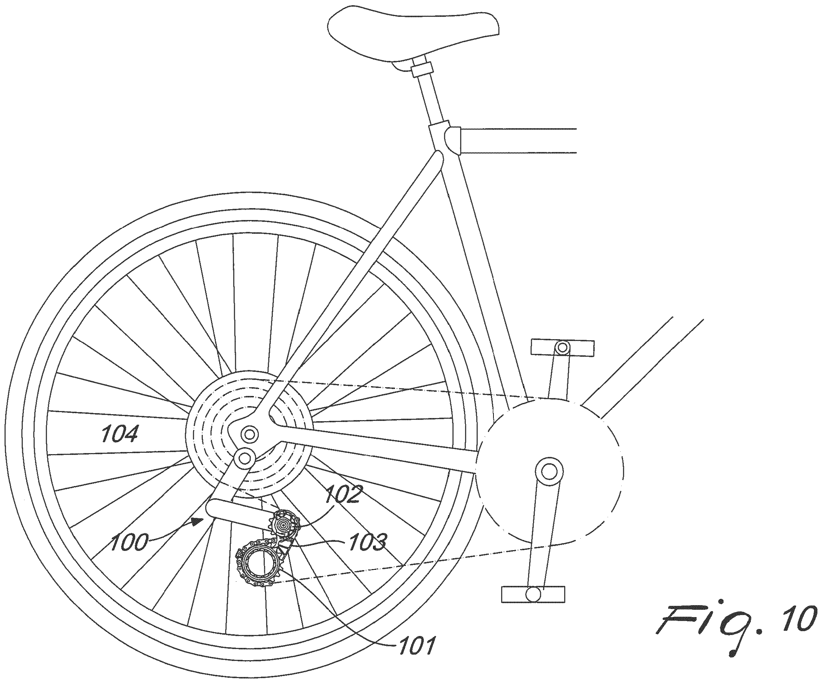

Figure 10 is a schematic view of the rear part of a bicycle having a derailleur which is equipped with a tension pulley and a guide pulley as shown in the foregoing Figures.

Conventionally, pulleys of a rear derailleur may be rotatably mounted between two lateral plates of a cage on central bearings which are fitted on central bolts which connect two lateral plates of the cage to each other.

Pulleys as shown and described herein may also be mounted by mounting means (and not by central bolts) and an interposed radial bearing, wherein the mounting means are arranged so as to be spaced from the center of rotation of the pulley. The mounting means are positioned along a circular mounting opening provided in the cage spaced away from the center of rotation of the pulley. Such a bearing, which may be a ball bearing, a roller bearing or a slide bearing, may have a much larger radius than conventional bearings of the pulleys of a rear derailleur. The cage can be a single-plate or a two-plate cage. Such a bearing can be arranged so as to leave a free space in the center of the guide pulley in its mounted state, which provides for a free space which works against the accumulation of dirt because rotating pulley structural arms have been eliminated, and the chain guide is easy to clean. In addition, the free space, if provided at least in the center of the tension pulley, provides for a totally new and impressive look of the derailleur. With respect to this, reference is made to the pertinent teachings of a former patent application of the applicant of the present invention having the title "Improved chain guide for a rear derailleur of a bicycle" filed on May 29, 2020 with the EP as EP 20177531.9, the content of which is herewith incorporated by reference.

Figure 10 is a schematic view of the rear part of a bicycle having a rear derailleur 100 which comprises a tension pulley 101 and a guide pulley 102 mounted at a cage 103. The pulleys 101 und 102 may optionally each have a free space in their center. The rest of the derailleur 100 is shown only schematically. The cassette is shown also schematically at reference number 104.

Pulleys as shown and described herein may be rotatably mounted between two lateral plates of a cage on central bearings which are fitted on central bolts which connect the two lateral plates of the cage to each other, or rotatably mounted on central bearings which are fitted on a single-plated cage.

Pulleys as shown and described herein may also be rotatably mounted between two lateral plates of a cage by mounting means (and not by central bolts) and an interposed radial bearing, wherein the mounting means are arranged so as to be spaced from the center of rotation of the pulley, as is the case in EP 20177531.9. Also, in this case the cage may be a single-plated cage, as described in EP 20177531.9.

### FIRST EMBODIMENT

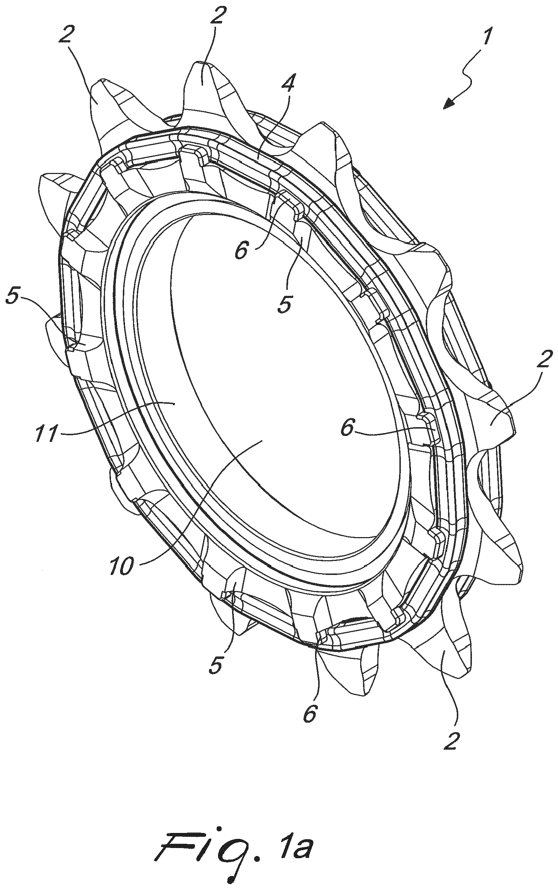

With reference to Figures 1a to 9a, a first embodiment of a pulley of a rear derailleur of a bicycle is described.

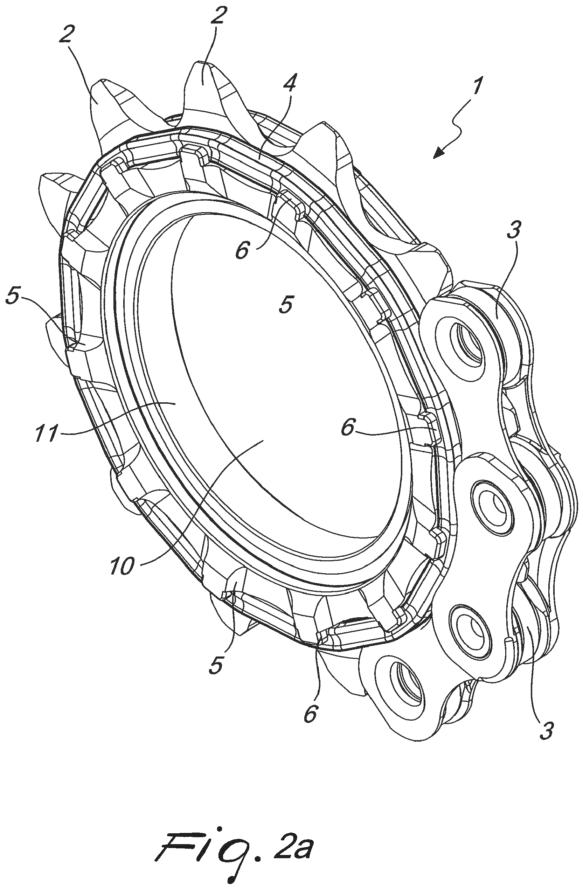

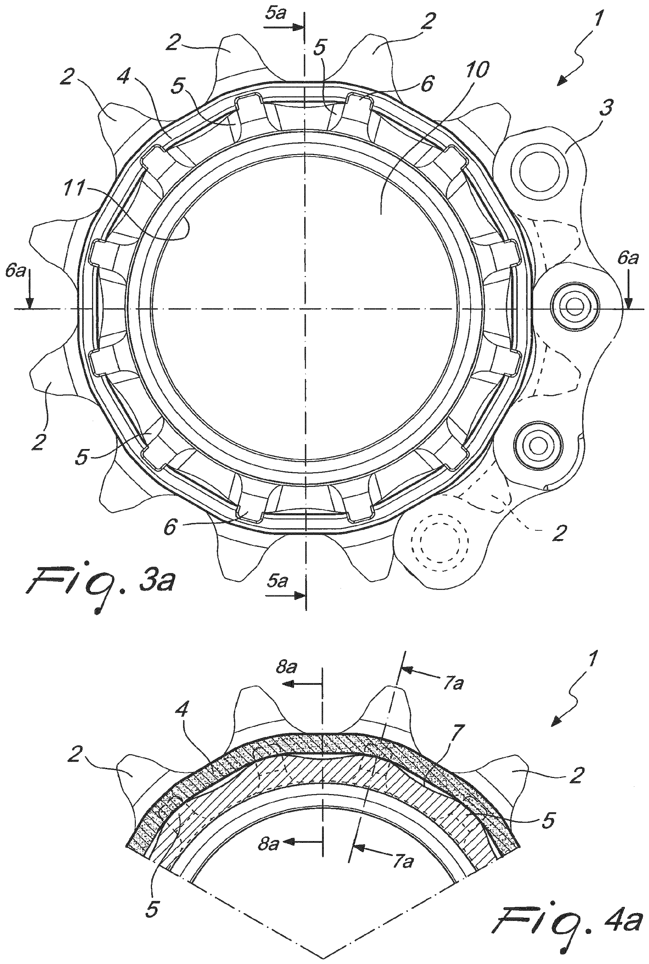

As shown therein, a pulley 1, which is shown as a guide pulley but may also be embodied as a tension pulley, has a plurality of teeth 2 adapted to come in contact with link members of a roller chain 3 running over the pulley 1 (as partially shown in Figures 2a and 3a).

The pulley 1 carries on each of its axial side faces a cushioning ring 4 preferably made of an elastically deformable material like natural or synthetic rubber, polymer or elastomer or mixtures thereof.

As is best seen in Fig. 4a, each cushioning ring 4 is supported radially by a number of spaced supports 5 formed adjacent to each side face of the pulley 1 and projecting outwards in the axial direction of the pulley 1, wherein the number of supports 5 is equal to the number of teeth 2. Each support 5 is angularly aligned with one respective tooth 2 of the pulley 1.

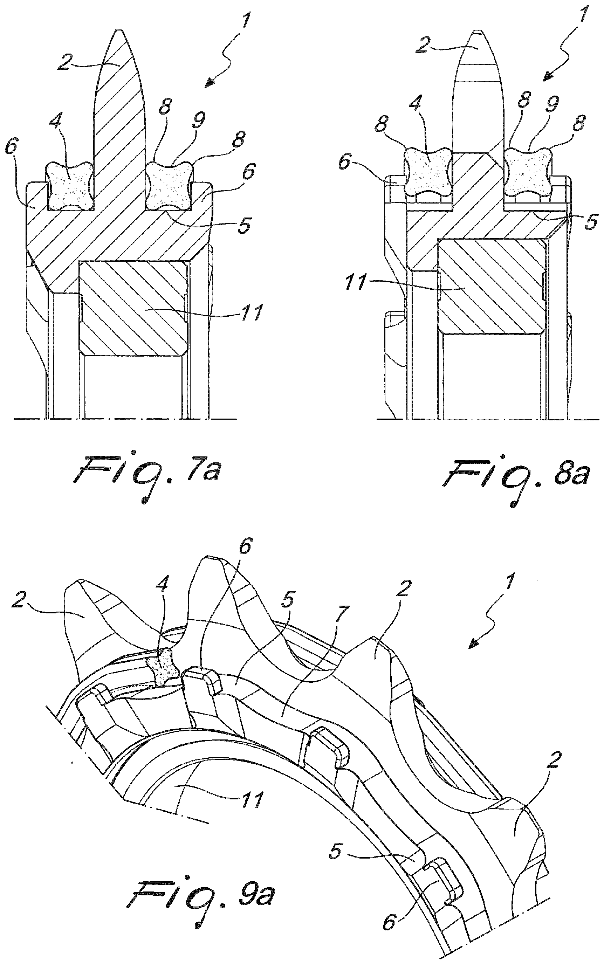

Each support 5 extends initially axially away from the pulley 1 and ends in a radial extension 6 which is preferably substantially right-angled and extends preferably a few millimeters radially outwards, as is best seen in Figures 7a, 8a and Fig. 9a. Thus, each side of the pulley 1, the supports 5 and their radial extensions 6 form a plurality of short channels opening radially outwards and holding the cushioning ring 4. That is, each cushioning ring 4 is supported axially between one side face of the pulley 1 and the radial extensions 6, and further rests on the supports 5.

Each cushioning ring 4 is passed with a certain tension around the supports 5, such that each cushioning ring 4 is supported in a tensioned manner on the supports 5. Between every two adjacent supports 5, the cushioning ring 4 extends free-floating in a straight line, so that the whole cushioning ring 4 adopts a polygonal configuration, as is best seen for instance in Fig. 3a.

With reference again to Figs. 4a and 9a, every two adjacent supports 5 may be connected contiguously by a concavely curved transition piece 7 formed laterally to the pulley 1, wherein the supports 5 and the concavely curved transition pieces 7 on one side of the pulley 1 form an undulating track extending radially beneath the corresponding cushioning ring 4. Preferably the undulating track (along with the structure supporting it) is identical on both sides of the pulley 1.

The concavely curved transition pieces 7 of each track form fixed end stops which limit the downward movements of the free-floating portions of the cushioning ring 4 in the direction of the axis of the pulley 1 to a degree by which the free-floating portions of the cushioning ring 4 shall yield in the direction of the axis when a chain 3 with its rollers and link plates is running onto and over the pulley 1.

The shape of the track formed by the supports 5 and by the concavely curved transition pieces 7 therebetween may be complementary to the lateral profile of common bicycle chain link plates which are wider in their connection areas than in the middle.

As can be seen best in Figures 7a and 8a, each cushioning ring 4 has a cross section which is called herein generally x-shaped. More specifically, the cross-sectional profile of each cushioning ring 4 has the shape of an alphabetic character x whose legs are short with respect to the body of the character and have concave sections between the legs. The legs as such have preferably convex rounded ends which will be discussed later.

Preferably each cushioning ring 4 projects radially from the radial extensions 6 by at least approximately 2/5 of the total radial height of the cushioning ring 4 or by at least 1/4 of the total radial height of the cushioning ring. Advantageously, the compressibility and height of the cushioning ring 4 are chosen so that in operation the link plates of the roller chain 3 may contact the cushioning ring 4 but not the radial extensions 6.

As can be seen best in Figures 7a and 8a, the rounded ends of the legs of each cushioning ring 4 are four circumferentially distributed and convexly curved protrusions 8 on the respective cushioning ring 4 which are connected contiguously by four circumferentially distributed and concavely curved recesses 9 in the respective cushioning ring 4.

Each cushioning ring 4 is mounted to the pulley 1 in a manner and orientation in which two curved protrusions 8 and one concavely curved recess 9 partially face the outer and inner link plates, respectively, of a roller chain 3 running over the pulley 1. The inner protrusion 8 is able to contact and dampen the inner link plates, and the outer protrusion 8 is able to contact and dampen the outer link plates.

While the x-shape of the cushioning rings 4 is advantageous in that one does not have to pay attention to the orientation in which one places them on the cushioning rings 4, it has to be noted that only the two upper curved protrusions 8 and the one upper concavely curved recess 9 are essential for the function of the cushioning ring 4 according to the broadest aspect of the present invention.

In other words, in the broadest aspect of the invention, each cushioning ring 4 comprises, on its side facing the roller chain 3, only one groove extending along its entire perimeter length, which groove, as seen in a cross-sectional view through the cushioning ring 4, is the recession 9 flanked by the two protrusions 8, wherein the protrusions 8 are adapted and orientated to come in contact with outer and inner link plates, respectively, of the roller chain 3 running over the pulley 1. Preferably, a similar additional groove can be provided on the opposite side of the cushioning ring 4 facing the supports 5. Further preferably, similar additional grooves can be provided at the lateral faces of the cushioning ring 4 facing the radial extension 6 and the pulley 1, respectively. The number of similar additional grooves my vary between 1 and 3 and any combinations of sides are envisaged as preferred alternatives of the invention. The most preferred alternative of the invention includes 4 grooves resulting in the above-described x-shape which is advantageous in terms of its insertion, as discussed, and elasticity. In addition, the x-shape is advantageous in terms of manufacturing.

The function of the groove on the side facing the roller chain 3 is to dampen the forces produced by chain members running from the slack span of the roller chain 3 onto the pulley 1 in a smooth and well-defined manner and with fewer losses than cushioning rings having an annular or a rectangular cross section.

The cushioning rings 4 may also have other basic cross sections than shown herein, for example square with three even sides, if each cushioning ring 4 comprises, at least on its side facing the roller chain, the groove extending along its entire perimeter length, which groove, as seen in a cross-sectional view through the cushioning ring, forms the recess 9 flanked by the two protrusions 8, wherein the protrusions 8 are adapted and orientated to come in contact with outer and inner link plates, respectively, of a roller chain 3 running over the pulley 1.

In the embodiment of Figures 1a to 9a, the pulley 1 is of a type having a free space 10 in its center, as described in EP 20177531.9. In this case the pulley 1 will be mounted by mounting means (not shown) via an interposed roller bearing 11 to a single-plated cage of the rear derailleur. However, any conventional guide or tension pulley for a common rear derailleur of a bicycle, wherein for instance the pulleys are rotatably mounted between two lateral plates of the cage on central bearings which are fitted on central bolts connecting two lateral plates of the cage to each other are envisaged to be included in the scope of the present invention, as defined by the appended claims.

### SECOND EMBODIMENT

With reference to Figures 1b to 8b, a second embodiment of a pulley of a rear derailleur of a bicycle is described.

As shown therein, a pulley 21, which is shown as a guide pulley but may also be embodied as a tension pulley, has a plurality of teeth 22 adapted to come in contact with link members of a roller chain 23 running over the pulley 21 (as partially shown in Figures 2b and 3b).

The pulley 21 carries on each of its axial side faces a cushioning ring 24 made of an elastically deformable material like natural or synthetic rubber, polymer or elastomer or mixtures thereof.

As can be best seen in Figures 4b to 8b, each cushioning ring 24 is supported by and accommodated in an annular channel formed adjacent to each side face of the pulley 21 and opening radially outward. In a side view of the pulley 21, the annular channel forms a polygon, wherein the number of corners of the polygon is equal to the number of teeth 22 of the pulley 21. The corners of the polygon are angularly offset from the center of the teeth 22 of the pulley 21 by half the angular distance between adjacent teeth 22 of the pulley 21.

The annular channel is limited radially by a polygonal shoulder 25 formed laterally to the pulley 21 and is defined axially between the side face of pulley 21 and a polygonal radial extension 26 of the polygonal shoulder 25. The corners of the polygonal shoulder 25 and of the polygonal radial extension 26 are advantageously a little rounded.

The polygonal shoulder 25 and the polygonal radial extension 26 each comprise a number of straight portions equal to the number of teeth 22 of the pulley 21 and angularly aligned with a respective tooth 22 of the pulley 21.

Because each cushioning ring 24 is mounted with a certain tension around the corresponding polygonal shoulder 25 it also adopts a polygonal form.

As can be seen best in Figures 7b and 8b, each cushioning ring 24 has a cross section which is called herein generally x-shaped. More specifically, the cross-sectional profile of each cushioning ring 24 has the shape of an alphabetic character x whose legs are short with respect to the body of the character and have concave sections between them. The legs as such have preferably convex rounded ends which will be discussed later.

Preferably each cushioning ring 4 projects radially from the radial extensions 26 by at least approximately 2/5 of the total radial height of the cushioning ring 24 or by at least 1/4 of the total radial height of the cushioning ring 24. Advantageously, the compressibility and height of the cushioning ring 24 are chosen such that during operation the link plates of the roller chain 23 may contact the cushioning ring 24 but not the radial extensions 26.

As can be seen best in Figures 7b and 8b, the rounded ends of the legs of each cushioning ring 24 are four circumferentially distributed and convexly curved protrusions 28 on the respective cushioning ring 24 which are connected contiguously by four circumferentially distributed and concavely curved recesses 29 in the respective cushioning ring 4.

Each cushioning ring 24 is mounted to the pulley 21 in a manner and orientation in which two curved protrusions 28 and one concavely curved recess 29 partially face the outer and inner link plates, respectively, of a roller chain 23 running over the pulley 21. The inner protrusion 28 is able to contact and dampen the inner link plates, and the outer protrusion 29 is able to contact and dampen the outer link plates.

While the x-shape of the cushioning rings 24 is advantageous in that one does not have to pay attention to the orientation in which one places them on the cushioning rings 24, it has to be noted that only the two upper curved protrusions 28 and the one upper concavely curved recess 29 are essential to the function of the cushioning ring 24 according to the broadest aspect of the present invention.

In other words, in the broadest aspect of the invention, each cushioning ring 24 comprises, on its side facing the roller chain 23, only one groove extending along its entire perimeter length, which groove, as seen in a cross-sectional view through the cushioning ring 24, is the recess 29 flanked by the two protrusions 28, wherein the protrusions 28 are adapted and orientated to come in contact with outer and inner link plates, respectively, of the roller chain 23 running over the pulley 21. Preferably, a similar additional groove can be provided at the opposite side of the cushioning ring 24 facing the polygonal shoulder 25. Further preferably, similar additional grooves can be provided at the lateral faces of the cushioning ring 24 facing the polygonal radial extension 26 and the pulley 21, respectively. The number of similar additional grooves may vary between 1 and 3 and any combinations of sides are envisaged as preferred alternatives of the invention. The most preferred alternative of the invention includes 4 grooves resulting in the above-described x-shape which is advantageous in terms of its insertion, as discussed, and elasticity. In addition, the x-shape is advantageous in terms of manufacturing.

The function of the groove on the side facing the roller chain 23 is to dampen the forces produced by chain members running from the slack span of the roller chain 23 onto the pulley 21 in a smooth and well-defined manner and with fewer losses than cushioning rings having exact annular or rectangular cross sections.

The cushioning rings 24 may also have other basic cross sections than shown herein, for example square with three even sides, if each cushioning ring 24 comprises, at least on its side facing the roller chain 23, a groove extending along its entire perimeter length, which groove, as seen in a cross-sectional view through the cushioning ring 24, forms a recess 29 flanked by two protrusions 28, wherein the protrusions 28 are adapted and orientated to come in contact with outer and inner link plates, respectively, of a roller chain 23 running over the pulley 21.

A particular advantage of the embodiment of Figures 1b to 8b is that the cushioning rings 24 adopt the polygonal form of the polygonal shoulders 25. That is, also each cushioning ring 24 comprises a number of straight portions equal to the number of teeth 22 of the pulley 21 and angularly aligned with a respective tooth 22 of the pulley 21.

Therefore, the embodiment of Figures 1b to 8b is particularly suited when embodied as a guide pulley of a rear derailleur. Such a rear derailleur would be suited for chains 23 of a special type wherein tops of the link plates are straight-line which are known as AXS "flattop" chains, as mentioned above. In a rear derailleur, the chain 23 runs with the straight tops over the guide pulley, as seen in Fig. 3b, and the straight tops perfectly match the straight portions of the polygonal cushioning ring 24. Accordingly, the impact of the chain 23 on the pulley 21 is smooth and silent.

It is also advantageous to combine in a rear derailleur of the bicycle the pulley 1 of the first embodiment, as a tension pulley, with the pulley 21 of the second embodiment as a guide pulley, such that in this way the conventional part of the link plates of the chain 23 will interact with the tension pulley 1 of the first embodiment and the straight tops of the link plates of the chain 23 will cooperate with the pulley 21 of the second embodiment. Thus, the impact of the chain 23 at both pulleys is silent and smooth. Within the meaning of this invention a conventional chain link plate is one having a sequence of convex, concave and convex surfaces as shown in the first and third embodiments and also for one side of the link plate in the second embodiment.

In the embodiment of Figures 1b to 8a, the pulley 21 is of a type having a free space 30 in its center, as described in EP 20177531.9. In this case the pulley 21 will be mounted by mounting means (not shown) via an interposed roller bearing 31 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other, is envisaged as to be included in the scope of the present invention, as defined by the appended claims.

### THIRD EMBODIMENT

With reference to Figures 1c to 7c, a third embodiment of a pulley of a rear derailleur of a bicycle is described.

As shown therein, a pulley 41, which is shown as a guide pulley but may also be embodied as a tension pulley, has a plurality of teeth 42 adapted to come in contact with link members of a roller chain 43 running over the pulley 41 (as partially shown in Figures 2c and 3c).

The pulley 41 carries on each of its axial side faces a cushioning ring 44 made of an elastically deformable material like rubber, plastic or elastomer or mixtures thereof.

As best seen in Figures 4c to 7c, each cushioning ring 44 is supported by and accommodated in a circular channel formed adjacent to each side face of the pulley 41 and opening radially outward. In a side view of the pulley 41, the annular channel forms exactly a circle.

The circular channel is limited radially by a circular shoulder 45 formed laterally to the pulley 41 and is defined axially between the side face and a circular radial extension 46 of the circular shoulder 45.

Each cushioning ring 44 is mounted with a certain tension around the corresponding circular shoulder 45 and therefore adopts also a circular shape.

As can be seen best in Fig. 7c, each cushioning ring 44 has a cross section which is called herein generally x-shaped. More specifically, the cross-sectional profile of each cushioning ring 44 has the shape of an alphabetic character x whose legs are short with respect to the body of the character and have concave sections between the legs. The legs as such have preferably convex rounded ends which will be discussed later.

Preferably each cushioning ring 44 projects radially from the radial extensions 46 by at least approximately 2/5 of a total radial height of the cushioning ring 44 or by at least 1/4 of a total radial height of the cushioning ring 44. Advantageously, the compressibility and height of the cushioning ring 44 are chosen such that in operation the link plates of the roller chain 43 may contact the cushioning ring 44 but not the radial extensions 46.

As can be seen best in Fig. 7c, the rounded ends of the legs of each cushioning ring 44 are four circumferentially distributed and convexly curved protrusions 48 on the respective cushioning ring 44 which are connected contiguously by four circumferentially distributed and concavely curved recesses 49 in the respective cushioning ring 44.

Each cushioning ring 44 is mounted to the pulley 41 in a manner and orientation in which two curved protrusions 48 and one concavely curved recess 49 partially face the outer and inner link plates, respectively, of a roller chain 43 running over the pulley 41. The inner protrusion 48 is able to contact and dampen the inner link plates, and the outer protrusion 49 is able to contact and dampen the outer link plates.

While the x-shape of the cushioning rings 44 is advantageous in that one does not have to pay attention to the orientation in which one places them on the cushioning rings 44, it has to be noted that only the two upper curved protrusions 48 and the one upper concavely curved recess 49 are essential to the function of the cushioning ring 44 according to the broadest aspect of the present invention.

In other words, in the broadest aspect of the invention, each cushioning ring 44 comprises, on its side facing the roller chain 43, only one groove extending along its entire perimeter length, which groove, as seen in a cross-sectional view through the cushioning ring 44, is the recess 49 flanked by the two protrusions 48, wherein the protrusions 48 are adapted and orientated to come in contact with outer and inner link plates, respectively, of the roller chain 43 running over the pulley 41. Preferably, a similar additional groove can be provided on the opposite side of the cushioning ring 44 facing the circular shoulder 45. Further preferably, similar additional grooves can be provided at the lateral faces of the cushioning ring 44 facing the circular radial extension 46 and the pulley 41, respectively. The number of similar additional grooves may vary between 1 and 3 and any combinations of sides are envisaged as preferred alternatives of the invention. The most preferred alternative of the invention includes 4 grooves resulting in the above-described x-shape which is advantageous in terms of its insertion, as discussed, and elasticity. In addition, the x-shape is advantageous in terms of manufacturing.

The function of the groove on the side facing the roller chain 43 is to dampen the forces produced by chain members running from the slack span of the roller chain 43 onto the pulley 41 in a smooth and well-defined manner and with fewer losses than cushioning rings having exactly annular or rectangular cross sections.

The cushioning rings 44 may also have other basic cross sections than shown herein, for example square with three even sides, if each cushioning ring 44 comprises, at least on its side facing the roller chain 43, a groove extending along its entire perimeter length, which groove, as seen in a cross-sectional view through the cushioning ring 44, forms a recess 49 flanked by two protrusions 48, wherein the protrusions 48 are adapted and orientated to come in contact with outer and inner link plates, respectively, of a roller chain 43 running over the pulley 41.

In the embodiment of Figures 1c to 7a, the pulley 41 is of a type having a free space 50 in its center, as described in EP 20177531.9. In this case the pulley 41 will be mounted by mounting means (not shown) via an interposed roller bearing 51 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other are envisaged to be included in the scope of the present invention, as defined by the appended claims.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize the disclosure may be embodied in other specific forms without departing from the disclosure or essential characteristics thereof. The foregoing embodiments are therefore to be considered illustrative rather than limiting the disclosure described herein in all respects. The scope of the invention is thus indicated by the appended claims, rather than the foregoing description, and all changes that come within the meaning and range of equivalence of the claims are therefore intended to be embraced therein.

Embodiments of the present invention provides for the following items.

Item 1. A pulley (1, 21, 41, 101, 102) for a bicycle rear derailleur (100), the pulley (1, 21, 41, 101, 102) carrying on each of its side faces a cushioning ring (4, 24, 44) made of an elastically deformable material and adapted to come in contact with link plates of a roller chain (3, 23, 43) running over the pulley (1, 21, 41, 101, 102), wherein: each cushioning ring (4, 24, 44) comprises, at least on its side facing the roller chain (3, 23, 43), a groove extending along its entire perimeter length, which groove, as seen in a cross-sectional view through the cushioning ring (4, 24, 44), is a recess (9, 29, 49) flanked by two protrusions (8, 28, 48), wherein the protrusions (8, 28, 48) are adapted and orientated to come in contact with outer and inner link plates, respectively, of a roller chain (3, 23, 43) running over the pulley (1, 21, 41, 101).

Item 2. The pulley (1, 21, 41, 101, 102) according to item 1, wherein the pulley is a tension pulley (102) for a bicycle rear derailleur (100) or wherein the pulley is a guide pulley (101) for a bicycle rear derailleur (100).

Item 3. The pulley (1, 21, 41, 101, 102) according to items 1 or 2, wherein the pulley (1, 21, 41, 101, 102) has a plurality of teeth (1, 22, 42).

Item 4. The pulley (1, 21, 41, 101, 102) according to one or more of the preceding items, wherein in a cross-sectional view through the cushioning ring (4, 24, 44) the protrusions (8, 28, 48) are curved convexly and are connected contiguously by the recess (9, 29, 49) which is curved concavely.

Item 5. The pulley (1, 21, 41, 101, 102) according to one or more of the preceding items, wherein the cross section of each cushioning ring (4, 24, 44) is generally x-shaped.

Item 6. The pulley (1, 21, 41, 101, 102) according to item 5, wherein the cross-sectional profile of each cushioning ring (4, 24, 44) has the shape of an alphabetic character x whose legs are short with respect to the body of the character and have concave sections between the legs, wherein preferably the ends of the legs are concavely rounded.

Item 7. The pulley (1, 21, 41, 101, 102) according to item 6, wherein in a cross-sectional view through the cushioning ring (4, 24, 44) the concavely rounded ends of the legs are four circumferentially distributed and convexly curved protrusions (8, 28, 48) of the respective cushioning ring (4, 24, 44) which are connected contiguously by four circumferentially distributed and concavely curved recesses (9, 29, 49).

Item 8. The pulley (1, 21, 41, 101, 102) according to one or more of items 4 to 7, wherein each cushioning ring (4, 24, 44) is mounted to the pulley (1, 21, 41, 101, 102) in a manner and orientation in which the two convexly curved protrusions (8, 28, 48) of item 4 or two of the four convexly curved protrusions (8, 28, 48) of item 7 partially face the outer and inner link plates, respectively, of a roller chain (3, 23, 43) running over the pulley (1, 21, 41, 101, 102) and are able to come in contact therewith.

Item 9. The pulley (1, 21, 41, 101, 102) according to one of the preceding items, wherein the pulley (1) includes a number of spaced supports (5) formed laterally to the pulley (1) and projecting in the axial direction of the pulley (1) for supporting each cushioning ring (4), wherein the number of spaced supports (5) is equal to the number of teeth (2) of the pulley (1), wherein each support (5) is angularly aligned with a respective tooth (2) of the pulley (1), and wherein the cushioning ring (4) extends free-floating in a straight line between every two adjacent supports (5).

Item 10. The pulley (1) according to item 9, wherein the pulley (1) includes radial extensions (6) formed at each support (5), each cushioning ring (4) being supported axially between one side face of the pulley (1) and the radial extensions (6) formed at each support (5).

Item 11. The pulley (1) according to item 10, wherein each cushioning ring (4) projects radially from the radial extensions (6), preferably by at least 1/4 of the total radial height of the cushioning ring (4) and more preferably by at least 2/5 of the total radial height of the cushioning ring (4).

Item 12. The pulley (1) according to one or more of items 9 to 11, wherein every two adjacent supports (5) are connected contiguously by a concavely curved transition piece (7) formed laterally to the pulley (1), wherein the supports (5) and the concavely curved transition pieces (7) on each side face of the pulley (1) form together an undulating track extending radially beneath the corresponding cushioning ring (4).

Item 13. The pulley (1) according to item 12, wherein the supports (5) and the concavely curved transition pieces (7) are made in one piece with the pulley (1).

Item 14. The pulley (1, 21, 41, 101, 102) according to one or more of items 1 to 8, wherein the pulley (21) includes an annular channel formed adjacent to each side face of the pulley (21) and opening radially outward, wherein each cushioning ring (24) is supported by the annular channel, wherein in a side view of the pulley (21), the annular channel forms a polygon, wherein the number of corners of the polygon is equal to the number of teeth (22) of the pulley (21), wherein the corners of the polygon are angularly offset from the center of the teeth (22) of the pulley (21) by half the angular distance between adjacent teeth (22) of the pulley (21).

Item 15. The pulley (21) according to item 14, wherein the annular channel is limited radially by a polygonal shoulder (25) formed laterally to the pulley (21) and is defined axially between the side face and a polygonal radial extension (26) of the polygonal shoulder (25).

Item 16. The pulley (21) according to item 15, wherein the corners of the polygonal shoulder (25) are rounded.

Item 17. The pulley (21) according to items 15 or 16, wherein the polygonal shoulder (25) comprises a number of straight portions equal to the number of teeth (22) of the pulley (21) and angularly aligned with a respective tooth (22) of the pulley (21).

Item 18. The pulley (21) according to one or more of items 14 to 17, wherein each cushioning ring (24) projects radially from the annular channel, preferably by at least 1/4 of the total radial height of the cushioning ring (4) and more preferably by at least 2/5 of the total radial height of the cushioning ring (4).

Item 19. The pulley (1, 21, 41, 101, 102) according to one or more of items 1 to 8, wherein the pulley (41) includes a circular channel formed adjacent to each side face of the pulley (41) and opening radially outward, wherein each cushioning ring (44) is supported by the circular channel.

Item 20. The pulley (41) according item 18, wherein each circular channel is made in one piece with the pulley (41).

Item 21. The pulley (41) according item 19 or 20, wherein each cushioning ring (44) projects radially from the circular channel, preferably by at least 1/4 of the total radial height of the cushioning ring (4) and more preferably by at least 2/5 of the total radial height of the cushioning ring (4).

Item 22. The pulley (1, 21, 41, 101, 102) according to one or more of the preceding items, wherein the elastically deformable material of each cushioning ring (4, 24, 44) is rubber, plastic or elastomer or mixtures thereof.

Item 23. A bicycle rear derailleur (100) comprising a cage (103) supporting a tension pulley (101) and a guide pulley (102) both being rotatably mounted on the cage (103), the cage (103) being movable with respect to the bicycle and adapted to guide a roller chain (3, 23, 43) in an S-shape, wherein the guide pulley (102) and/or the tension pulley (101) are devised according to one or more of items 1 to 22.

Item 24. The bicycle rear derailleur (100) according to item 23, wherein at least one of the pulleys (1, 21, 41,101,102) is rotatably mounted to the cage (103) by mounting means and an interposed radial bearing (11, 21, 51), wherein the mounting means are arranged so as to be spaced from the center of rotation of the pulley (1, 21, 41, 101, 102) and are positioned along a circular mounting opening provided in the cage (103) spaced away from the center of rotation of the pulley (1, 21, 41, 101, 102), so as to leave a free space (10, 30, 50) in the center of the pulley (1, 21, 41, 101, 102) in its mounted state.

Item 25. The bicycle rear derailleur (100) according to item 23, wherein at least one of the pulleys (1, 21, 41, 101, 102) is rotatably mounted between two lateral plates of the cage (103) on central bearings which are fitted on central bolts which connect two lateral plates of the cage (103) to each other.

### List of references

- 1: pulley
- 2: tooth
- 3: roller chain
- 4: cushioning ring
- 5: support
- 6: radial extension
- 7: transition piece
- 8: protrusion
- 9: recess
- 10: free space
- 11: roller bearing
- 21: pulley
- 22: tooth
- 23: roller chain
- 24: cushioning ring
- 25: polygonal shoulder
- 26: polygonal radial extension
- 28: protrusion
- 29: recess
- 30: free space
- 31: roller bearing
- 41: pulley
- 42: tooth
- 43: roller chain
- 44: cushioning ring
- 45: circular shoulder
- 46: circular radial extension
- 48: protrusion
- 49: recess
- 50: free space
- 51: roller bearing
- 100: rear derailleur
- 101: tension pulley
- 102: guide pulley
- 103: cage
- 104: cassette

## Claims

1. A pulley (1, 21, 41, 101, 102) for a bicycle rear derailleur (100), the pulley (1, 21, 41, 101, 102) carrying on each of its side faces a cushioning ring (4, 24, 44) made of an elastically deformable material and adapted to come in contact with link plates of a roller chain (3, 23, 43) running over the pulley (1, 21, 41, 101, 102), wherein: each cushioning ring (4, 24, 44) comprises, at least on its side facing the roller chain (3, 23, 43), a groove extending along its entire perimeter length, which groove, as seen in a cross-sectional view through the cushioning ring (4, 24, 44), is a recess (9, 29, 49) flanked by two protrusions (8, 28, 48), wherein the protrusions (8, 28, 48) are adapted and orientated to come in contact with outer and inner link plates, respectively, of a roller chain (3, 23, 43) running over the pulley (1, 21, 41, 101).

2. The pulley (1, 21, 41, 101, 102) according to claim 1, wherein the pulley is a tension pulley (102) for a bicycle rear derailleur (100) or wherein the pulley is a guide pulley (101) for a bicycle rear derailleur (100).

3. The pulley (1, 21, 41, 101, 102) according to claims 1 or 2, wherein the pulley (1, 21, 41, 101, 102) has a plurality of teeth (1, 22, 42).

4. The pulley (1, 21, 41, 101, 102) according to one or more of the preceding claims, wherein in a cross-sectional view through the cushioning ring (4, 24, 44) the protrusions (8, 28, 48) are curved convexly and are connected contiguously by the recess (9, 29, 49) which is curved concavely.

5. The pulley (1, 21, 41, 101, 102) according to one or more of the preceding claims, wherein the cross section of each cushioning ring (4, 24, 44) is generally x-shaped.

6. The pulley (1, 21, 41, 101, 102) according to claim 5, wherein the cross-sectional profile of each cushioning ring (4, 24, 44) has the shape of an alphabetic character x whose legs are short with respect to the body of the character and have concave sections between the legs, wherein preferably the ends of the legs are concavely rounded.

7. The pulley (1, 21, 41, 101, 102) according to claim 6, wherein in a cross-sectional view through the cushioning ring (4, 24, 44) the concavely rounded ends of the legs are four circumferentially distributed and convexly curved protrusions (8, 28, 48) of the respective cushioning ring (4, 24, 44) which are connected contiguously by four circumferentially distributed and concavely curved recesses (9, 29, 49).

8. The pulley (1, 21, 41, 101, 102) according to one or more of claims 4 to 7, wherein each cushioning ring (4, 24, 44) is mounted to the pulley (1, 21, 41, 101, 102) in a manner and orientation in which the two convexly curved protrusions (8, 28, 48) of claim 4 or two of the four convexly curved protrusions (8, 28, 48) of claim 7 partially face the outer and inner link plates, respectively, of a roller chain (3, 23, 43) running over the pulley (1, 21, 41, 101, 102) and are able to come in contact therewith.

9. The pulley (1, 21, 41, 101, 102) according to one of the preceding claims, wherein the pulley (1) includes a number of spaced supports (5) formed laterally to the pulley (1) and projecting in the axial direction of the pulley (1) for supporting each cushioning ring (4), wherein the number of spaced supports (5) is equal to the number of teeth (2) of the pulley (1), wherein each support (5) is angularly aligned with a respective tooth (2) of the pulley (1), and wherein the cushioning ring (4) extends free-floating in a straight line between every two adjacent supports (5), wherein preferably the pulley (1) includes radial extensions (6) formed at each support (5), each cushioning ring (4) being supported axially between one side face of the pulley (1) and the radial extensions (6) formed at each support (5) and wherein further preferably each cushioning ring (4) projects radially from the radial extensions (6), preferably by at least 1/4 of the total radial height of the cushioning ring (4) and more preferably by at least 2/5 of the total radial height of the cushioning ring (4).

10. The pulley (1) according to claim 9, wherein every two adjacent supports (5) are connected contiguously by a concavely curved transition piece (7) formed laterally to the pulley (1), wherein the supports (5) and the concavely curved transition pieces (7) on each side face of the pulley (1) form together an undulating track extending radially beneath the corresponding cushioning ring (4), wherein preferably the supports (5) and the concavely curved transition pieces (7) are made in one piece with the pulley (1).

11. The pulley (1, 21, 41, 101, 102) according to one or more of claims 1 to 8, wherein the pulley (21) includes an annular channel formed adjacent to each side face of the pulley (21) and opening radially outward, wherein each cushioning ring (24) is supported by the annular channel, wherein in a side view of the pulley (21), the annular channel forms a polygon, wherein the number of corners of the polygon is equal to the number of teeth (22) of the pulley (21), wherein the corners of the polygon are angularly offset from the center of the teeth (22) of the pulley (21) by half the angular distance between adjacent teeth (22) of the pulley (21).

12. The pulley (21) according to claim 11, wherein the annular channel is limited radially by a polygonal shoulder (25) formed laterally to the pulley (21) and is defined axially between the side face and a polygonal radial extension (26) of the polygonal shoulder (25), wherein preferably the corners of the polygonal shoulder (25) are rounded and wherein further preferably the polygonal shoulder (25) comprises a number of straight portions equal to the number of teeth (22) of the pulley (21) and angularly aligned with a respective tooth (22) of the pulley (21).

13. The pulley (21) according to claim 11 or 12, wherein each cushioning ring (24) projects radially from the annular channel, preferably by at least 1/4 of the total radial height of the cushioning ring (4) and more preferably by at least 2/5 of the total radial height of the cushioning ring (4).

14. The pulley (1, 21, 41, 101, 102) according to one or more of claims 1 to 8, wherein the pulley (41) includes a circular channel formed adjacent to each side face of the pulley (41) and opening radially outward, wherein each cushioning ring (44) is supported by the circular channel.

15. The pulley (41) according claim 14, wherein each circular channel is made in one piece with the pulley (41) and/or wherein each cushioning ring (44) projects radially from the circular channel, preferably by at least 1/4 of the total radial height of the cushioning ring (4) and more preferably by at least 2/5 of the total radial height of the cushioning ring (4).

16. The pulley (1, 21, 41, 101, 102) according to one or more of the preceding claims, wherein the elastically deformable material of each cushioning ring (4, 24, 44) is rubber, plastic or elastomer or mixtures thereof.
